(19) **Europäisches Patentamt**

**European Patent Office**

**Office européen des brevets**

(11) **EP 1 366 608 B1**

(12) **FASCICULE DE BREVET EUROPEEN**

(45) Date de publication et mention
de la délivrance du brevet:
**04.10.2006 Bulletin 2006/40**

(21) Numéro de dépôt: **02713010.3**

(22) Date de dépôt: **05.03.2002**

(51) Int Cl.:
**H04L 25/03** *(2006.01)*     **H04L 25/00** *(2006.01)*

(86) Numéro de dépôt international:
**PCT/FR2002/000783**

(87) Numéro de publication internationale:
**WO 2002/071712 (12.09.2002 Gazette 2002/37)**

(54) **DISPOSITIF D'EGALISATION ET DE DECODAGE DE CANAUX SELECTIFS EN FREQUENCE**

ENTZERRUNGS- UND DEKODIERUNGSEINRICHTUNG VON FREQUENZ-SELEKTIVEN KANÄLEN

EQUALISING AND DECODING DEVICE FOR FREQUENCY-SELECTIVE CHANNELS

(84) Etats contractants désignés:
**DE ES GB IT**

(30) Priorité: **06.03.2001 FR 0103012**

(43) Date de publication de la demande:
**03.12.2003 Bulletin 2003/49**

(73) Titulaires:
• **FRANCE TELECOM**
**75015 Paris (FR)**
• **Groupe des Ecoles de Telecommunications
(ENST
Bretagne)
75013 Paris (FR)**

(72) Inventeurs:
• **LAOT, Christophe
F-29217 Plougonvelin (FR)**
• **LABAT, Joel
F-29470 Plougastel-Daoulas (FR)**

(74) Mandataire: **Texier, Christian et al
Cabinet Régimbeau
20, rue de Chazelles
75847 Paris cedex 17 (FR)**

(56) Documents cités:
**EP-A- 0 959 580**     **FR-A- 2 730 370**
**FR-A- 2 763 454**

• **LEE S S ET AL: "TRELLIS-CODED OFDM SIGNAL DETECTION WITH MAXIMAL RATIO COMBINING AND COMBINED EQUALIZATION AND TRELLIS DECODING" IEICE TRANSACTIONS ON COMMUNICATIONS, INSTITUTE OF ELECTRONICS INFORMATION AND COMM. ENG. TOKYO, JP, vol. E80-B, no. 4, 1 avril 1997 (1997-04-01), pages 632-638, XP000721839 ISSN: 0916-8516**
• **LEK ARIYAVISITAKUL S.: 'Turbo Space-Time Processing to Improve Wireless Channel Capacity' IEEE TRANSACTIONS ON COMMUNICATIONS vol. 48, no. 8, Août 2000, NEW YORK, USA, pages 1347 - 1359**

## Description

La présente invention est relative à un dispositif d'égalisation et de décodage de canal pour des canaux sélectifs en fréquence.

En transmission numérique, les solutions proposées utilisent généralement des procédés d'égalisation et de codage de canal. Dans l'approche classique, les fonctions élémentaires d'égalisation et de codage de canal sont traitées de manière disjointe n'exploitant qu'une partie de l'information mise à leur disposition. De ce fait, les performances globales du récepteur restent sous optimales.

Un but de l'invention est de remédier à cet inconvénient.

Depuis quelques années, plusieurs auteurs inspirés par les techniques des turbo-codes [1] ont proposé des solutions à base de détecteur à maximum de vraisemblance, d'annuleur d'interférences, et de codage de canal pour combattre l'interférence entre symboles. Parmi ces solutions rappelons brièvement les contributions les plus significatives.

En 1995, un récepteur appelé turbo-détecteur [2] associe un détecteur selon le maximum de vraisemblance à postériori avec un décodeur de canal, au travers d'un processus itératif. Les performances obtenues sont alors quasi-optimales pour de nombreux canaux. Toutefois, le turbo-détecteur reste plutôt réservé aux modulations à faible nombre d'états et aux canaux ayant des réponses impulsionnelles courtes.

En 1997, un autre récepteur turbo-égaliseur [3] a quant à lui été imaginé dans le but de pouvoir réduire la complexité du turbo-détecteur et de pouvoir égaliser de manière quasi-optimale les modulations à grand nombre d'états sur des canaux présentant un étalement important par rapport à la durée symbole.

L'invention a pour but d'améliorer les performances des deux récepteurs précédemment cités.

Pour cela, un dispositif selon l'invention est un dispositif d'égalisation et de décodage de canal comportant une série de modules qui comprennent chacun un égaliseur et un décodeur à sorties pondérées, et dont les modules de rang supérieur à 1 reçoivent d'une part une suite d'échantillons issus d'un capteur et retardés d'une quantité égale au temps de traitement des modules précédents, et d'autre part la sortie du module précédent, caractérisé en ce que les modules comprennent chacun des moyens de réception d'au moins deux suites d'échantillons différents et un égaliseur apte à déterminer une même suite d'échantillons égalisée en exploitant ces au moins deux suites reçues en tant que deux représentations différentes non égalisées de la suite d'échantillons à déterminer.

L'invention utilise la diversité spatiale et/ou temporelle fournie par une antenne possédant plusieurs capteurs (récepteur multi-voies) desquels capteurs sont typiquement issues respectivement les deux suites d'échantillons formant les deux représentations différentes. L'invention se distingue des contributions [4 - 8] par son traitement multi-voies de l'information reçue et/ou la possibilité d'utiliser des modulations à grand nombre d'états pour des transmissions à étalement temporel important.

De cette façon, on exploite une diversité spatiale et/ou temporelle de réception qui améliore nettement les résultats obtenus.

On égalise un signal multi-voies et on décode à plusieurs reprises un même bloc de données reçues en utilisant les informations fournies par le traitement précédent.

D'autres caractéristiques, buts et avantages de l'invention apparaîtront à la lecture de la description détaillée qui va suivre, faite en référence aux figures annexées sur lesquelles :

- la figure 1a représente une chaîne de transmission de type entrelaceur-bit.
- La figure 1b représente une chaîne de transmission de type entrelaceur-symbole.
- la figure 2 illustre schématiquement une structure itérative d'un dispositif d'égalisation multi-voies et de décodage de canal conforme à un mode de réalisation possible de l'invention ;
- la figure 3 représente schématiquement une structure possible d'un module de récepteur selon l'invention ;
- la figure 4a représente schématiquement une décomposition possible d'un décodeur de canal à entrée et sortie pondérée M-aire utilisé dans un mode de réalisation de l'invention, notamment pour des transmissions avec des modulations à plusieurs états dans le cas d'un entrelaceur-bit ;
- la figure 4b représente schématiquement une décomposition possible d'un décodeur de canal à entrée et sortie pondérée M-aire, utilisé dans un mode de réalisation de l'invention, notamment pour des transmissions avec des modulations à plusieurs états dans le cas d'un entrelaceur -symbole.
- la figure 5 représente schématiquement un mode de réalisation d'un égaliseur multi-voies selon l'invention ;
- la figure 6 représente schématiquement une autre possibilité pour la réalisation d'un égaliseur multi-voies selon l'invention ;
- la figure 7 est un graphe qui donne le taux d'erreurs binaires après décodage de canal en fonction d'un rapport Eb/N0 et qui illustre des performances d'un dispositif du type de celui représenté sur les figures 2, 3 et 5 pour une modulation MDP2 sur un canal multi-voies ;
- la figure 8 est un graphe qui donne le taux d'erreurs binaires après décodage de canal en fonction du rapport Eb/NO et qui illustre des performances d'un dispositif du type de celui représenté sur les figures 2, 3 et 6 pour une modulation MDP2 sur un canal multi-voies.

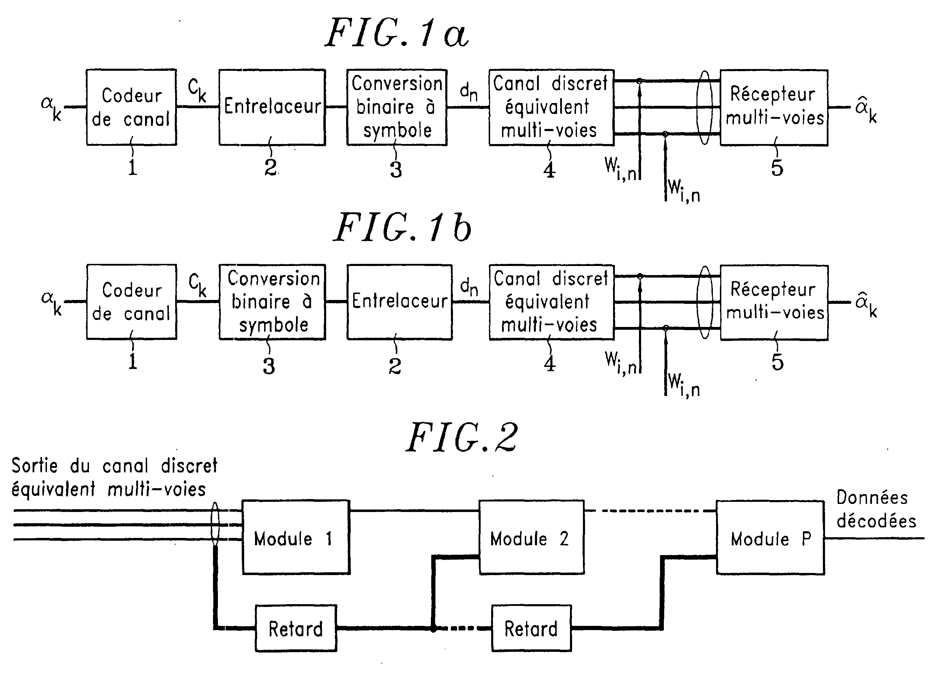

On a illustré sur les figures 1a et 1b le principe d'une chaîne de transmission de données. Un codeur de canal 1 est alimenté par des données binaires $\alpha_k$, mutuellement indépendantes et uniformément réparties sur l'ensemble {0; 1}, à raison d'une donnée toutes les $T_b$ secondes. Les données sortant du codeur de canal 1 sont transposées sur l'ensemble {-1 ; 1} et notées $c_k$.

Chaque passage d'un ensemble de 2m données codées $C_k$ au travers de l'entrelaceur référencé 2 et du convertisseur binaire à symbole (CBS) référencé 3 génère un symbole complexe $d_n = a_n + jb_n$ de variance $\sigma^2_d$. Les symboles $a_n$ et $b_n$ prennent leurs valeurs dans l'alphabet $\{\pm 1..., \pm (2p+1),..., \pm (\sqrt{M}-1)\}$ avec $\sqrt{M} = 2^m$. Cette opération peut, sans perte de généralité, intégrer les techniques de modulation codée en treillis, de codage différentiel ou tout autre système permettant d'associer à un ensemble d'éléments binaires un symbole de modulation. Les chaînes de transmission présentées figures 1a et 1b diffèrent sur l'emplacement d'un entrelaceur 2 qui peut être placé respectivement en amont (entrelaceur bit) ou en aval (entrelaceur symbole) du CBS référencé 3. Les symboles de modulation, notés dn, sont alors présentés à l'entrée d'un modulateur sur deux porteuses en quadrature.

L'ensemble modulateur, milieu de transmission, démodulateurs, filtres d'émission et de réception est modélisé par un canal discret équivalent 4 multi-voies, où chaque voie i, i = 1, ..., N, est perturbée par un bruit additif $w_{i,n}$ gaussien, centré, de variance $\sigma_i^2$. La sortie de chaque voie est égale à :

$$r_{i,n} = \sum_{l=0}^{Li} h_{i,l} d_{n-l} + w_{i,n} \tag{1}$$

Où les $h_{i,l}$ sont les coefficients du canal correspondant à la voie i et tel que la fonction de transfert associée à cette voie s'écrive :

$$H_i(z) = \sum_{l=0}^{L_i} h_{i,l} z^{-1} \tag{2}$$

Les coefficients des canaux des différentes voies sont supposées normalisées de façon à ce que le signal reçu au niveau du récepteur, ici noté 5, soit de puissance unitaire :

$$\sum_{i=1}^{N} \rho_i = 1 \quad avec \quad \rho_i = \sum_{l=0}^{L_i} |h_{i,l}|^2 \tag{3}$$

En considérant que les bruits $w_{i,n}$ sont décorrélés entre eux, la variance du bruit vu par un récepteur référencé 5 est égale à :

$$\sigma^2_{bruit} = \sum_{i=1}^{N} \sigma_i^2 \tag{4}$$

Le rapport signal à bruit (RSB) en entrée du turbo-égaliseur est égal à:

$$RSB = \frac{\sigma^2_d}{\sigma^2_{bruit}} = R \frac{E_b}{N_O} \log_2(M) \tag{5}$$

Où $E_b$ est l'énergie moyenne reçue par donnée d'information transmise, $N_O$ la densité spectrale de puissance du bruit à l'entrée du récepteur 5 et R le rendement du codeur de canal 1.

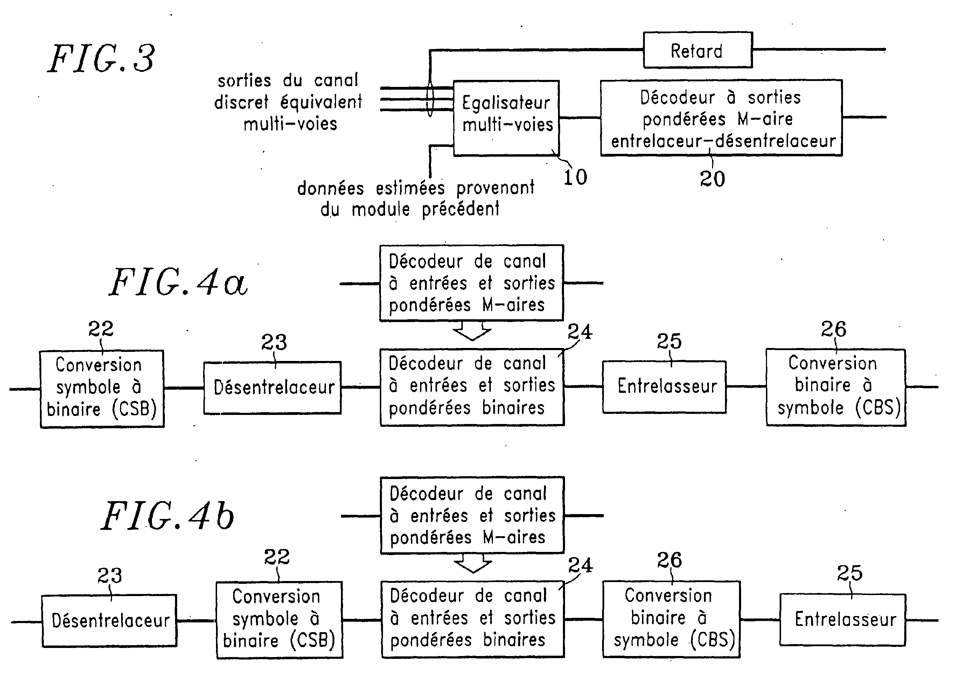

Dans la suite, on appelle module un traitement élémentaire d'un bloc d'information. Comme représenté sur la figure 3, chaque module p(p = 1,...,P) comprend un égaliseur multi-voies 10 (notamment un égaliseur apte à exploiter les signaux relevés simultanément par plusieurs capteurs en parallèle), et un décodeur de canal 20 intégrant les fonctions d'entrelacement et désentrelacement. L'égaliseur multi-voies 10 des modules de rang supérieur à 1 doit pouvoir exploiter les données estimées fournies par le décodeur de canal des modules de rang inférieurs.

Dans le cas des modulations à plusieurs états, le décodeur de canal 20 peut être scindé en cinq éléments distincts (figures 4a et 4b), soit un convertisseur symbole à binaire (CSB) 22, un désentrelaceur 23, un décodeur de canal à entrée et sortie pondérées binaires 24, un entrelaceur 25 et un convertisseur binaire à symbole (CBS) 26. La place de l'entrelaceur se situe en aval ou en amont du CSB 22 et réciproquement pour le CBS 26 conformément au schéma d'émission.

Dans la suite, nous présentons deux modes de réalisation. L'un appelé turbo-égaliseur multi-voies (TEMV), est composé de simples filtres numériques et l'autre, appelée turbo-détecteur multi-voies (TDMV), associe des filtres numériques et un détecteur à maximum de vraisemblance à postériori à entrées multiples.

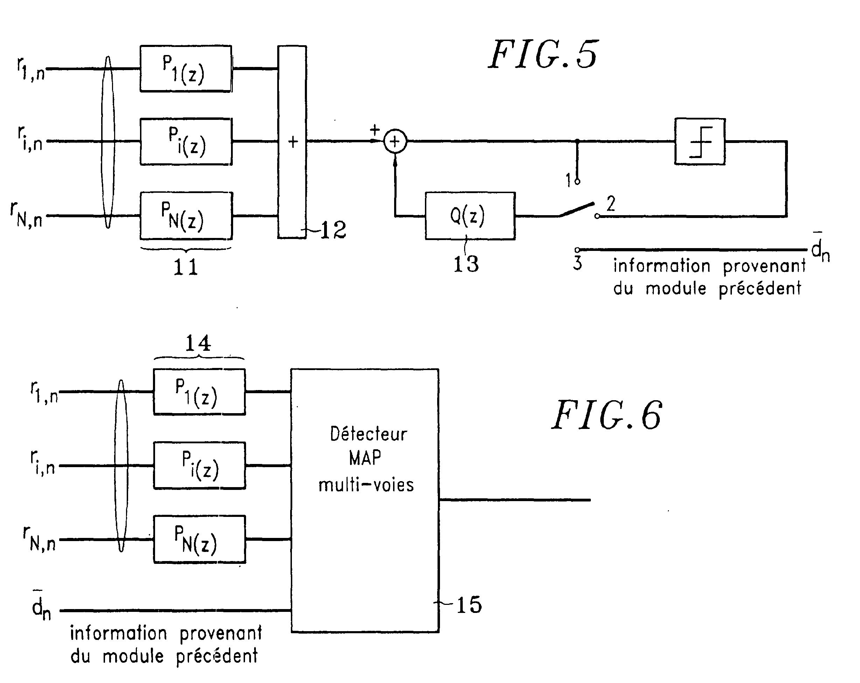

La structure de l'égaliseur multi-voies selon la première variante (TEMV), représentée figure 5, comporte un banc de filtres 11 comprenant autant de filtres qu'il y a de voies de réception. Un additionneur 12 vient alors sommer l'ensemble des sorties du banc de filtre 11. On soustrait alors à ce signal la sortie d'un filtre Q, référencé 13, alimenté soit par les données décidées de l'itération en cours, soit par les données estimées obtenues du module précédent. Pour le module de rang 1, le filtre transverse Q est alimenté soit par la sortie de l'égaliseur de ce même module, soit par des données décidées en sortie de l'égaliseur de ce même module. Le filtre transverse Q est alimenté par la sortie du module précédent, et avantageusement soit par la sortie de l'égaliseur de ce même module, soit par des données décidées en sortie de l'égaliseur de ce même module pour le module de rang 1.

Ce dernier filtre 13 permet de reconstruire une partie ou la totalité de l'interférence entre symboles présente en sortie de l'additionneur 12 de façon similaire à l'enseignement de FR 2 763 454.

Pour décrire le dispositif, nous avons considéré une modulation MDP2 et un nombre de voies fixé à N = 2. Les canaux de transmission sont tels que les puissances du signal et du bruit sont identiques sur chaque voie. Pour le premier module (p = 1), l'égaliseur linéaire optimal au sens de l'erreur quadratique moyenne peut alors être réalisé, outre par le filtre Q, par deux filtres transverses de fonction de transfert $P_i(Z)$ et un sommateur.

$$P_i(z) = \frac{H_i^{\bullet}(1/z \cdot)\sigma_d^2}{(H_1(z)H_1^{\bullet}(1/z \cdot) + H_2(z)H_2^{\bullet}(1/z \cdot))\sigma_d^2 + \sigma_{bruit}^2} \qquad i = 1,2 \; ; \; p = 1 \qquad (6)$$

Avec $H_1 = h_{1,1} \; ; \; h_{1,2} \; ; \; ... \; h_{1,L1}$ et $H_2 = h_{2,1} \; ; \; h_{2,2} \; ; \; ... \; ; \; h_{2,L2}$

Ces filtres sont généralement réalisés sous forme transverse, mais peuvent tout aussi bien être réalisés en cascadant un filtre transverse et un filtre récursif. Il est aussi tout à fait possible d'utiliser un simple filtre adapté ou encore un égaliseur non linéaire à retour de décision.

La sortie de l'égaliseur multi-voies 10 vient alimenter l'entrée du décodeur de canal 20 a entrées et sorties pondérés. La sortie du décodeur de canal 20 fournit les données estimées qui seront utilisées par le module suivant pour alimenter un filtre Q(z) référencé 13. Le processus itératif est alors enclenché et peut se poursuivre. Lorsque le nombre d'itérations est suffisant et que le TEMV a fonctionné correctement, alors les fonctions de transfert des filtres $P_i(z)$ et Q(z) sont proches ou égales à :

$$P_i(z) = H_i^{\bullet}(1/z \cdot) \quad i = 1,2 \; ; \; p > 1 \qquad (7)$$

Le nombre de coefficients de ces filtres est fini. Ces filtres sont

$$Q(z) = H_1(z)H_1^{\bullet}(1/z \cdot) + H_2(z)H_2^{\bullet}(1/z \cdot) - 1 \quad p > 1 \qquad (8)$$

réalisés sous forme transverse.

La manière de déterminer en pratique les coefficients des filtres $P_1$, $P_2$, et Q des égaliseurs ainsi que la manière d'obtenir les sorties pondérées du décodeur de canal 20 pourra être celle exposée dans FR 2 763 454.

Pour illustrer le fonctionnement du TEMV, nous avons considéré deux canaux fortement sélectif en fréquence et dont les réponses impulsionnelles discrètes non normalisées sont égales à :

H$_1$ = [0.38 0.6 0.6 0.38]
H$_2$ = [0.8264 -0.1653 0.8512 0.1636 0.81]

Les coefficients des filtres sont calculés à partir des relations (6), (7) et (8) en supposant les coefficients de H$_1$ et H$_2$ connus. Pour les simulations, on a considéré la chaîne de transmission présentée figure 1b et un entrelacement de taille 256x256 et l'émission de plus de 1 million d'éléments binaires. Le codage de canal est réalisé par un codeur convolutif de rendement ½ et de polynômes générateurs (23,35) en octal.

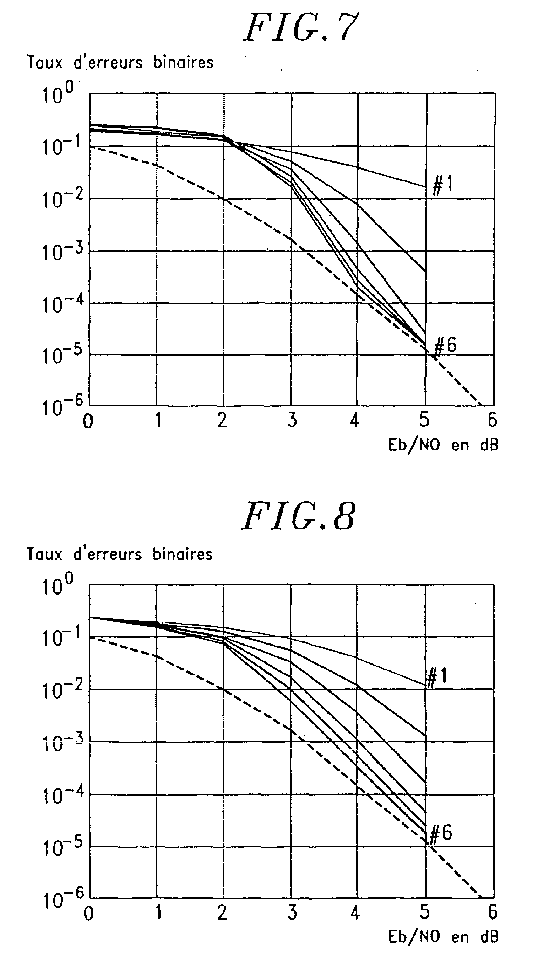

Les performances du TEMV sont représentées figure 7. La courbe en traits pointillés représente les performances obtenues sur le canal Gaussien non sélectif en fréquence avec codage et les courbes en traits pleins les performances obtenues en sortie du TEMV pour différentes itérations.

Ces résultats montrent que le TEMV est très efficace pour lutter contre l'interférence entre symboles et tangente les performances du canal Gaussien non sélectif en fréquence dès lors que le rapport signal à bruit dépasse quelques dB.

On décrira maintenant un second mode de réalisation, qui est un récepteur basé sur l'utilisation d'un détecteur multi-voies.

La structure du détecteur multi-voies du TDMV, représentée figure 6, comporte un banc de filtres 14 comprenant autant de filtres qu'il y a de voies de réception. Les sorties du banc de filtres 14 ainsi que les données estimées d'un module précédent alimentent l'entrée d'un détecteur MAP multi-voies 15 selon le maximum de vraisemblance à postériori (détecteur à sorties pondérées).

La sortie pondérée du détecteur 15 est déduite d'un calcul de logarithme de rapport de vraisemblance. Une valeur intrinsèque peut être obtenue par la soustraction de la donnée estimée du module précédent, pondérée par un coefficient, à la sortie du détecteur 15.

Il est à préciser que pour le module de rang 1, les données estimées fournies par le module précédent ne sont pas connues. Elles seront prises égales à zéro en considérant que leur fiabilité est nulle.

Pour décrire ce dispositif, nous avons considéré une modulation MDP2 et un nombre de voies fixé à N = 2. Les canaux de transmission sont tels que les puissances du signal et du bruit sont identiques sur chaque voie. Nous avons aussi supposé que les filtres 14 précédant le détecteur 15 ne possédaient qu'un seul coefficient égal à 1. Dans ce cas, détecter la séquence la plus vraisemblable revient alors à minimiser la métrique (9) ci-dessous par rapport à toutes les séquences j possibles :

$$\min_j M_n(j) = \sum_{k=0}^{n} \left| r_{1,k} - \sum_{l=0}^{L_i} h_{1,l} d_{k-l}^{(j)} \right|^2 + \left| r_{2,k} - \sum_{l=0}^{L_i} h_{2,l} d_{k-l}^{(j)} \right|^2 + \gamma \left| \tilde{d}_k - d_k^{(j)} \right|^2 \qquad (9)$$

où $\gamma$ est un coefficient positif et d$_k$ la donnée estimée obtenue de la sortie du décodeur de canal d'un module précédent, facilement calculée sur le modèle du procédé exposé dans FR 2 730 370.

La sortie du détecteur 15 fournit un logarithme de rapport de vraisemblance auquel on soustrait la donnée estimée d$_k$ multipliée par le coefficient $\gamma$ comme dans FR 2 730 370. La valeur extrinsèque obtenue vient alimenter l'entrée du décodeur de canal 20 à entrée et sortie pondérées (figure 3). La sortie du décodeur de canal 20 fournit les données estimées qui seront utilisées par le module suivant pour améliorer les performances de son détecteur 15. On notera que pour la première itération (p = 1) les données estimées ne sont pas connues et sont considérées comme des valeurs nulles.

La manière de déterminer en pratique les coefficients des filtres H$_1$(z) et H$_2$(z) ainsi que la manière d'obtenir les sorties pondérées du détecteur et du décodeur de canal sont en elles-mêmes bien connues. On pourra se référer notamment à FR 2 730 370.

Pour illustrer le fonctionnement du TDMV, nous avons considéré les deux canaux H$_1$ et H$_2$ précédemment décrits.

Les coefficients de H1 et H2 sont supposés connus du récepteur. Pour les simulations, on a considéré la chaîne de transmission de la figure 1b, un entrelacement de taille 256X256 et l'émission de plus de 1 million d'éléments binaires. Le codage de canal est réalisé par un codeur convolutif de rendement ½ et de polnômes générateurs (23,35) en octal.

Les performances du TDMV sont représentées figure 8. La courbe en traits pointillés représente les performances obtenues sur le canal Gaussien non sélectif en fréquence avec codage et les courbes en traits pleins les performances obtenues en sortie du TDMV pour différentes itérations.

Ces résultats montrent que le TDMV est très efficace pour lutter contre l'interférence entre symboles et tangente les performances du canal Gaussien non sélectif en fréquence dès lors que le rapport signal à bruit dépasse quelques dB.

Les dispositifs qui viennent d'être décrits trouvent avantageusement application dans tout récepteur multi-voies pour système de communication numérique sur canaux sélectifs en fréquence possédant du codage de canal (convolutif ou bloc) et de l'entrelacement.

Deux structures distinctes ont été proposées. La première structure (TEMV) permet d'égaliser des canaux de transmission possédant des réponses impulsionnelles longues pour des transmissions par modulations à grand nombre d'états. La seconde structure (TDMV) convient mieux à des modulations à faible nombre d'états pour des canaux de transmissions à faible dispersion temporelle.

L'invention est applicable à tout système de transmission utilisant des modulations linéaires telles que des modulations de phase (MDP), des modulations d'amplitude sur porteuses en quadrature (MAQ), des modulations associées à un codage différentiel, des modulations codées en treillis (MCT) et des modulations non linéaires pouvant être décomposées en sommes de modulations linéaires (GMSK, CPM, ...).

## Références

[1] C. Berrou, A. Glavieux, P. Thitimajshima, « Near Shannon limit error-correcting coding and decoding : turbo codes », proc ICC 93, pp. 1064-1070, Geneva, Switzerland, May 1993. Turbo-codes »

[2] C. Douillard, A. Glavieux, M. Jezequel, C. Berrou « Dispositif de réception de signaux numériques à structure itérative, module et procédés correspondants », brevet France Télécom et TDF N° 9501603, Février 1995, No de publication FR 2 730 370.

[3] C. Laot, A. Glavieux et J. Labat, « Dispositif d'égalisation et de décodage pour un canal de transmission numérique sélectif en fréquence », brevet France Télécom N° 9705978, Mai 1997, No de publication FR 2 763 454.

[4] G. Bauch, H. Khorram and J. Hagenauer, « Iterative Equalization and Decoding in Mobile Communications Systems », in Proc ; EPMC'97, Bonn, Germany, September/October 1997, pp.307-312.

[5] Nefedov, Nikolai, « Method and apparatus for channel coding and decoding for modulation schemes and memory », European Patent Application 99306051.6, Date of filing 29.07.1999, No de publication EP 0 980 148.

[6] V. Franz, G. Bauch, «Turbo-detection for enhanced Data for GSM Evolution », VTC 99, pp 2954-2958, vol.5.

[7] P. Strauch & al, « Turbo-Equalization for an 8-PSK Modulation Scheme in a Mobile TDMA Communication System », VTC 99, pp. 1605-1609, vol.3.

[8] M. Tüchler, R. Kötter, A.C. Singer, « Iterative Correction of ISI via Equalization and Decoding with Priors », ISIT 2000, Sorrento, Italy, June, 25th, 2000.

## Revendications

**1.** Dispositif d'égalisation et de décodage de canal dans un contexte de réception de signal multi-voies comportant une série de modules qui comprennent chacun un égaliseur (10) et un décodeur à sorties pondérées (20), et dont le module de rang 1 reçoit une suite d'échantillons issus d'une voie et les modules de rang supérieur à 1 reçoivent d'une part ladite suite d'échantillons issus de ladite voie et retardés d'une quantité égale au temps de traitement des modules précédents, et d'autre part la sortie du module précédent, **caractérisé en ce que** le module de rang 1 reçoit au moins une autre suite d'échantillons issus d'une autre voie et les modules de rang supérieur à 1 reçoivent ladite au moins une autre suite d'échantillons issus de ladite autre voie et retardés d'une quantité égale au temps de traitement des modules précédents, et les modules comprenant un égaliseur multi-voies apte à déterminer une même suite d'échantillons égalisée en exploitant ces au moins deux suites reçues en tant que deux représentations différentes non égalisées de la suite d'échantillons à déterminer.

**2.** Dispositif selon la revendication 1, **caractérisé en ce que** l'égaliseur (10) de chaque module comprend des moyens pour mettre en oeuvre deux traitements d'égalisation différents sur respectivement les au moins deux suites reçues.

**3.** Dispositif selon la revendication 1 ou la revendication 2, **caractérisé en ce que** l'égaliseur (10) de chaque module comprend un banc (11) d'au moins deux filtres transverses alimentés respectivement par lesdites au moins deux suites d'échantillons reçues, un sommateur (12) placé en aval du banc de filtres (11), un autre filtre transverse (13) alimenté par une sortie du module précédent, et des moyens pour soustraire une suite d'échantillons fournie pour cet autre filtre transverse à une suite d'échantillons obtenue en aval de l'additionneur (12).

**4.** Dispositif selon la revendication 3, **caractérisé en ce que** ledit autre filtre transverse (13) est prévu pour fournir une suite d'échantillons représentant au moins partiellement l'interférence présente en sortie de l'additionneur.

**5.** Dispositif selon la revendication 3 ou la revendication 4, **caractérisé en ce que** le module de rang 1 comprend des moyens pour alimenter son dit autre filtre transverse (13) par des données prélevées ou décidées en sortie de l'égaliseur (10) de ce même module.

**6.** Dispositif selon la revendication 1 ou la revendication 2, **caractérisé en ce que** chaque module de la série de modules comporte un égaliseur incluant un détecteur à entrées et sorties pondérés (15) et un banc de filtres (14) placés pour être alimentés chacun par une suite d'échantillons parmi lesdites au moins deux suites d'échantillons reçues, le détecteur (15) recevant d'une part les sorties de ces filtres (14) et d'autre part au moins une sortie du module précédent pour les modules de rang supérieur à 1.

**7.** Dispositif selon l'une quelconque des revendications précédentes, **caractérisé en ce que** le décodeur (20) est un décodeur de canal à entrées et sorties pondérées M-aire incluant cinq fonctions qui sont respectivement une fonction de conversion symbole à binaire (22), une fonction de désentrelacement (23), une fonction de décodage à entrées et sorties pondérées binaires (24), un entrelaceur (25) et un convertisseur binaire à symbole (26).

**8.** Dispositif selon l'une quelconque des revendications précédentes, en combinaison avec la revendication 7, **caractérisé en ce que** chaque module comporte un désentrelaceur (23) entre le module de conversion symbole à binaire (22) et le décodeur (24), ainsi qu'un entrelaceur (25) entre le décodeur (24) et le module de conversion binaire à symbole (26).

**9.** Dispositif selon l'une quelconque des revendications précédentes, en combinaison avec la revendication 7, **caractérisé en ce que** chaque module comporte un désentrelaceur (23) en amont du convertisseur symbole à binaire (22), ainsi qu'un entrelaceur (25) en aval du convertisseur binaire à symbole (26).

**10.** Dispositif selon l'une quelconque des revendications précédentes, en combinaison avec la revendication 7, **caractérisé en ce que** le convertisseur symbole à binaire (22) intègre une modulation codée en treillis.

**11.** Procédé d'égalisation et de décodage de canal dans un contexte de réception de signal multi-voies dans un dispositif d'égalisation et de décodage de canal comportant une série de modules qui comprennent chacun un égaliseur (10) et un décodeur à sorties pondérées (20), le procédé comprenant la réception par le module de rang 1 d'une suite d'échantillons issus d'une voie et la réception par les modules de rang supérieur à 1 d'une part ladite suite d'échantillons issus de ladite voie et retardés d'une quantité égale au temps de traitement des modules précédents, et d'autre part la sortie du module précédent, **caractérisé en ce que** le procédé comprend en outre la réception par le module de rang 1 d'au moins une autre suite d'échantillons issus d'une autre voie, la réception par les modules de rang supérieur à 1 de ladite au moins une autre suite d'échantillons issus de ladite autre voie et retardés d'une quantité égale au temps de traitement des modules précédents, et la détermination par les modules qui comprennent un égaliseur multi-voies d'une même suite d'échantillons égalisée en exploitant ces au moins deux suites reçues en tant que deux représentations différentes non égalisées de la suite d'échantillons à déterminer.

**Claims**

**1.** Device for channel equalization and decoding in a multi-pathway signal reception context comprising a series of modules which each comprise an equalizer (10) and a decoder with weighted outputs (20), and whose module of rank 1 receives a string of samples emanating from a pathway and modules of rank greater than 1 receive, on the one hand, the said string of samples emanating from the said pathway and delayed by a quantity equal to the processing time of the previous modules, and, on the other hand, the output of the previous module, **characterized in that** the module of rank 1 receives at least one other string of samples emanating from another pathway and the modules of rank greater than 1 receive the said at least one other string of samples emanating from the said other pathway and delayed by a quantity equal to the processing time of the preceding modules, and the modules comprising a multi-pathway equalizer able to determine one and the same equalized string of samples by utilizing these at least two strings received as two unequalized different representations of the string of samples to be determined.

**2.** Device according to Claim 1, **characterized in that** the equalizer (10) of each module comprises means for implementing two different equalization processings on respectively the at least two strings received.

**3.** Device according to Claim 1 or 2, **characterized in that** the equalizer (10) of each module comprises a bank (11) of at least two transverse filters fed respectively with said at least two sample strings received, a summator (12) placed downstream of the filter bank (11), another transverse filter (13) fed by an output of the previous module, and means for subtracting a sample string provided in respect of this other transverse filter from a sample string obtained downstream of the adder (12).

4. Device according to Claim 3, **characterized in that** said other transverse filter (13) is designed to provide a sample string representing at least partially the interference present at the output of the adder.

5. Device according to Claim 3 or Claim 4, **characterized in that** the module of rank 1 comprises means for feeding its said other transverse filter (13) with data tapped off or decided at the output of the equalizer (10) of this same module.

6. Device according to Claim 1 or Claim 2, **characterized in that** each module of the series of modules comprises an equalizer including a detector with weighted outputs and inputs (15) and a bank of filters (14) placed so as to each be fed with a string of samples from among said at least two strings of samples received, the detector (15) receiving, on the one hand, the outputs from these filters (14) and, on the other hand, at least one output from the previous module in respect of the modules of rank greater than 1.

7. Device according to any one of the preceding claims, **characterized in that** the decoder (20) is a channel decoder with M-ary weighted outputs and inputs including five functions that are respectively a symbol to binary conversion function (22), a deinterleaving function (23), a decoding function with binary weighted outputs and inputs (24), an interleaver (25) and a binary to symbol converter (26).

8. Device according to any one of the preceding claims, in combination with Claim 7, **characterized in that** each module comprises a deinterleaver (23) between the symbol to binary conversion module (22) and the decoder (24), as well as an interleaver (25) between the decoder (24) and the binary to symbol conversion module (26).

9. Device according to any one of the preceding claims, in combination with Claim 7, **characterized in that** each module comprises a deinterleaver (23) upstream of the symbol to binary converter (22), as well as an interleaver (25) downstream of the binary to symbol converter (26).

10. Device according to any one of the preceding claims, in combination with Claim 7, **characterized in that** the symbol to binary converter (22) integrates a trellis-coded modulation.

11. Method of channel equalization and decoding in a multi-pathway signal reception context in a channel equalization and decoding device comprising a series of modules which each comprise an equalizer (10) and a decoder with weighted outputs (20), the method comprising the reception by the module of rank 1 of a string of samples emanating from a pathway and the reception by the modules of rank greater than 1, on the one hand, of the said string of samples emanating from the said pathway and delayed by a quantity equal to the processing time of the previous modules, and, on the other hand, the output of the previous module, **characterized in that** the method furthermore comprises the reception by the module of rank 1 of at least one other string of samples emanating from another pathway, the reception by the modules of rank greater than 1 of the said at least one other string of samples emanating from the said other pathway and delayed by a quantity equal to the processing time of the preceding modules, and the determination by the modules which comprise a multi-pathway equalizer of one and the same equalized string of samples by utilizing these at least two strings received as two unequalized different representations of the string of samples to be determined.

**Patentansprüche**

1. Vorrichtung zur Kanalentzerrung und -dekodierung im Zusammenhang mit dem Empfang von Mehrwegsignalen, die eine Reihe von Modulen umfaßt, von denen jedes einen Entzerrer (10) und einen Dekodierer mit gewichteten Ausgängen (20) umfaßt, wobei das Modul der Stufe 1 eine von einem Weg kommende Abtastwertfolge empfängt und die Module der Stufe größer als 1 einesteils die genannte Abtastwertfolge, die vom genannten Weg kommt und um eine Spanne verzögert ist, die gleich der Verarbeitungszeit der vorausgehenden Module ist, und anderenteils die Ausgabe des vorausgehenden Moduls empfangen, **dadurch gekennzeichnet, daß** das Modul der Stufe 1 wenigstens eine von einem weiteren Weg kommende weitere Abtastwertfolge empfängt und die Module der Stufe größer als 1 die wenigstens eine weitere Abtastwertfolge empfangen, die vom weiteren Weg kommt und um eine Spanne verzögert ist, die gleich der Verarbeitungszeit der vorausgehenden Module ist, und wobei die Module einen Mehrwegentzerrer umfassen, der dafür eingerichtet ist, eine bestimmte entzerrte Abtastwertfolge zu bestimmten, indem er diese wenigstens zwei Folgen auswertet, die er als zwei verschiedene nicht entzerrte Repräsentationen der zu bestimmenden Abtastwertfolge empfängt.

2. Vorrichtung nach Anspruch 1, **dadurch gekennzeichnet, daß** der Entzerrer (10) jedes Moduls Mittel umfaßt, um zwei verschiedene Entzerrungsverarbeitungen jeweils auf die wenigstens zwei empfangenen Folgen anzuwenden.

3. Vorrichtung nach Anspruch 1 oder 2, **dadurch gekennzeichnet, daß** der Entzerrer (10) jedes Moduls folgendes umfaßt: eine Bank (11) mit wenigstens zwei FIR-Filtern, auf die jeweils die wenigstens zwei empfangenen Abtastwertfolgen eingegeben werden, einen nach der Filterbank (11) angeordneten Summierer (12), einen weiteren FIR-Filter (13), auf den ein Ausgang des vorausgehenden Moduls eingegeben wird, und Mittel, um eine von diesem weiteren FIR-Filter bereitgestellte Abtastwertfolge von einer Abtastwertfolge zu subtrahieren, die nach dem Summierer (12) erhalten wird.

4. Vorrichtung nach Anspruch 3, **dadurch gekennzeichnet, daß** der weitere FIR-Filter (13) vorgesehen ist, um eine Abtastwertfolge bereitzustellen, die wenigstens teilweise die am Ausgang des Summierers vorhandene Interferenz repräsentiert.

5. Vorrichtung nach Anspruch 3 oder 4, **dadurch gekennzeichnet, daß** das Modul der Stufe 1 Mittel umfaßt, um seinen weiteren FIR-Filter (13) mit Daten zu versorgen, die am Ausgang des Entzerrers (10) desselben Moduls entnommen oder bereitgestellt werden.

6. Vorrichtung nach Anspruch 1 oder 2, **dadurch gekennzeichnet, daß** jedes Modul der Reihe der Module einen Entzerrer umfaßt, der einen Detektor mit gewichteten Eingängen und Ausgängen (15) und eine Bank von Filtern (14) einschließt, die so angeordnet sind, daß jeder mit einer Abtastwertfolge von den wenigstens zwei empfangenen Abtastwertfolgen versorgt wird, wobei der Detektor (15) einesteils die Ausgaben dieser Filter (14) und anderenteils wenigstens eine Ausgabe des vorausgehenden Moduls für die Module der Stufe größer als 1 empfängt.

7. Vorrichtung nach einem der vorhergehenden Ansprüche, **dadurch gekennzeichnet, daß** der Dekoder (20) ein Kanaldekoder mit gewichteten M-nären Ausgängen und Eingängen ist, der fünf Funktionen einschließt, die eine Funktion zur Symbol-zu-Binär-Umwandlung (22), eine Deinterleaver-Funktion (23), eine Dekodierfunktion mit binären gewichteten Ausgängen und Eingängen (24), ein Interleaver (25) beziehungsweise ein Binär-zu-Symbol-Wandler (26) sind.

8. Vorrichtung nach einem der vorhergehenden Ansprüche in Kombination mit Anspruch 7, **dadurch gekennzeichnet, daß** jedes Modul zwischen dem Modul zur Symbol-zu-Binär-Umwandlung (22) und dem Dekoder (24) einen Deinterleaver (23) sowie zwischen dem Dekoder (24) und dem Modul zur Binär-zu-Symbol-Umwandlung (26) einen Interleaver (25) umfaßt.

9. Vorrichtung nach einem der vorhergehenden Ansprüche in Kombination mit Anspruch 7, **dadurch gekennzeichnet, daß** jedes Modul vor dem Symbol-zu-Binär-Wandler (22) einen Deinterleaver (23) sowie nach dem Binär-zu-Symbol-Wandler (26) einen Interleaver (25) umfaßt.

10. Vorrichtung nach einem der vorhergehenden Ansprüche in Kombination mit Anspruch 7, **dadurch gekennzeichnet, daß** Symbol-zu-Binär-Wandler (22) eine Trellis-kodierte Modulation integriert.

11. Verfahren zur Kanalentzerrung und -dekodierung im Zusammenhang mit dem Empfang von Mehrwegsignalen in einer Vorrichtung zur Kanalentzerrung und -dekodierung, die eine Reihe von Modulen umfaßt, von denen jedes einen Entzerrer (10) und einen Dekodierer mit gewichteten Ausgängen (20) umfaßt, wobei das Verfahren den Empfang einer von einem Weg kommende Abtastwertfolge durch das Modul der Stufe 1 und den Empfang durch die Module der Stufe größer als 1 von einesteils der genannten Abtastwertfolge, die vom genannten Weg kommt und um eine Spanne verzögert ist, die gleich der Verarbeitungszeit der vorausgehenden Module ist, und anderenteils der Ausgabe des vorausgehenden Moduls umfaßt, **dadurch gekennzeichnet, daß** das Verfahren außerdem folgendes umfaßt: den Empfang durch das Modul der Stufe 1 von wenigstens einer von einem weiteren Weg kommenden weiteren Abtastwertfolge, den Empfang durch die Module der Stufe größer als 1 von der wenigstens einen weiteren Abtastwertfolge, die vom weiteren Weg kommt und um eine Spanne verzögert ist, die gleich der Verarbeitungszeit der vorausgehenden Module ist, und die Bestimmung durch die Module, die einen Mehrwegentzerrer umfassen, einer bestimmten entzerrten Abtastwertfolge, indem diese wenigstens zwei Folgen ausgewertet werden, die als zwei verschiedene nicht entzerrte Repräsentationen der zu bestimmenden Abtastwertfolge empfangen werden.

*FIG.1a*

Codeur de canal — 1 — $c_k$ — Entrelaceur — 2 — Conversion binaire à symbole — 3 — $d_n$ — Canal discret équivalent multi-voies — 4 — Récepteur multi-voies — 5 — $\hat{\alpha}_k$

$\alpha_k$

$w_{i,n}$  $w_{i,n}$

*FIG.1b*

Codeur de canal — 1 — $c_k$ — Conversion binaire à symbole — 3 — Entrelaceur — 2 — $d_n$ — Canal discret équivalent multi-voies — 4 — Récepteur multi-voies — 5 — $\hat{\alpha}_k$

$\alpha_k$

$w_{i,n}$  $w_{i,n}$

*FIG.2*

Sortie du canal discret équivalent multi-voies

Module 1 — Module 2 — Module P — Données décodées

Retard — Retard

**FIG.3**

sorties du canal discret équivalent multi-voies

Retard

Egalisateur multi-voies — 10

Décodeur à sorties pondérées M—aire entrelaceur—désentrelaceur — 20

données estimées provenant du module précédent

**FIG.4a**

Décodeur de canal à entrées et sorties pondérées M—aires

22 — Conversion symbole à binaire (CSB)

23 — Désentrelaceur

24 — Décodeur de canal à entrées et sorties pondérées binaires

25 — Entrelasseur

26 — Conversion binaire à symbole (CBS)

**FIG.4b**

Décodeur de canal à entrées et sorties pondérées M—aires

23 — Désentrelaceur

22 — Conversion symbole à binaire (CSB)

24 — Décodeur de canal à entrées et sorties pondérées binaires

26 — Conversion binaire à symbole (CBS)

25 — Entrelasseur

EP 1 366 608 B1

*FIG.5*

$r_{1,n}$  $P_{1(z)}$

$r_{i,n}$  $P_{i(z)}$

$r_{N,n}$  $P_{N(z)}$

11

+  12

+  Q(z)  13  1  2  3  $\overline{d}_n$

information provenant
du module précédent

14

$r_{1,n}$  $P_{1(z)}$

$r_{i,n}$  $P_{i(z)}$

$r_{N,n}$  $P_{N(z)}$

$\overline{d}_n$

information provenant
du module précédent

Détecteur
MAP
multi-voies

15

$\overline{d}_n$

*FIG.6*

EP 1 366 608 B1

## FIG.7

Taux d'erreurs binaires

Eb/NO en dB

## FIG.8

Taux d'erreurs binaires

Eb/NO en dB